# EUROPEAN PATENT APPLICATION

(11) **EP 4 199 168 A1**
(43) Date of publication of application: **21.06.2023**
(21) Application number: 21896794.1
(22) Date of filing: 11.11.2021
(51) Int. Cl.: H01M 10/0567, H01M 10/0525

(54) **NON-AQUEOUS ELECTROLYTE SOLUTION AND LITHIUM BATTERY**

(30) Priority: 25.11.2020 CN 202011334924
(71) Applicant: Zhangjiagang Guotai-Huarong New Chemical Materials Co., Ltd, Suzhou, Jiangsu 215600 (CN)
(72) Inventor: CHEN, Xiaoqin, Suzhou, Jiangsu 215600 (CN); GAN, Chaolun, Suzhou, Jiangsu 215600 (CN); SHI, Erbo, Suzhou, Jiangsu 215600 (CN); ZHANG, Li, Suzhou, Jiangsu 215600 (CN); GU, Mingyao, Suzhou, Jiangsu 215600 (CN); SUN, Cao, Suzhou, Jiangsu 215600 (CN)
(74) Representative: Bryers LLP
(86) International application number: PCT/CN2021/130047
(87) International publication number: WO 2022/111293

(57) **Abstract**

Disclosed are a non-aqueous electrolyte solution and a lithium battery. In order to reduce or avoid the use of a sulfur-containing compound in a non-aqueous electrolyte solution and solve the problems of a poor high-temperature storage performance and cycle performance of a lithium battery, in the present invention a non-aqueous electrolyte solution is used, comprising a lithium salt, an organic solvent and additives. The additives include an additive A and an additive B. The additive A is one or more of substances as shown in structural general formula (1). In the structural general formula (1) of the additive A, R₁ is selected from alkylene, alkyleneoxy, fluoroalkylene, fluoroalkyleneoxy, alkenylene or fluoroalkenylene, and R₂ and R₃ are independently selected from hydrogen, phenyl, alkynyl, alkynyloxy, alkyl, alkoxy, fluoroalkyl, fluoroalkoxy, alkenyl or fluoroalkenyl. The additive B is a boron-containing lithium salt. In the non-aqueous electrolyte solution of the present invention, a new additive capable of replacing a sulfur-containing compound is used, such that the high-temperature storage performance and cycle performance of a lithium battery can be improved.

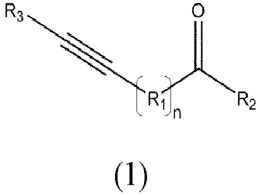

## Description

### Technical Field of the Invention

The present disclosure belongs to the lithium-ion battery field, in particular to a non-aqueous electrolyte solution and a lithium-ion battery.

### Background of the Invention

With the emergence of emerging consumption fields such as mobile phones, tablet computers, smart wearables, and ETC, lithium-ion batteries have shown great advantages due to their high energy density and long cycle life. Sulfonyl compounds are usually used in the field of electrolyte solutions in the form of small organic molecules, as solvent additives for non-aqueous electrolyte solutions of lithium-ion batteries, using the electrode film-forming properties of sulfonyl groups to form a stable SEI film/protective film on the electrode surface, thereby suppressing gas generation, and improving the high-temperature storage performance, cycle performance, life characteristics, etc of the batteries. In the electrolyte solution, lithium salts containing sulfonyl groups are also widely used, especially sulfonimide salts. From EU REACH regulations, for SVHC substances contained in articles, if the substance is present in those articles above a concentration of 0.1 % weight by weight and the total amount of the articles produced or imported exceeds 1 tonne/year, the producer or importer of the articles shall notify the European Chemicals Agency. Within 6 months after the substance is included in the REACH authorization candidate list (i.e., SVHC list), the enterprise must submit the ECHA notification. Our products are exported in the form of electrolyte solutions (mixture) and do not need to be notified (notification is only required when exporting as consumer goods, such as: batteries), and PS (1,3-propanesultone) was updated to the SVHC (Substances of Very High Concern) list on December 17, 2015, it is a hazardous substance, but it is not in the restriction and authorization list, and has been included in the candidate list for authorization (that is to say, it may be officially included in the authorization list in the future). If it is officially included in the authorization list in the future, the importers need authorization for their use, and if the authorization is denied, the substance will be banned at a certain time. As the SVHC list gets wider, many sulfur-containing compounds are likely to be restricted later. Therefore, there is a need to find sulfur-free additives that can replace sulfur-containing compounds and improve the high-temperature storage performance and cycle performance of electrolyte solutions.

### Summary of the Invention

The technical problem to be solved by the present disclosure is to provide a new non-aqueous electrolyte solution and lithium battery capable of ensuring high temperature storage performance and cycle performance.

To solve the above technical problems, the present disclosure employs the following technical solution:
One aspect of the present disclosure provides a non-aqueous electrolyte solution comprising a lithium salt, an organic solvent and additives, and the additives comprise an additive A and an additive B,
the additive A is one or more of the substances represented by the structural general formula (1), the structural general formula (1) of the additive A is: 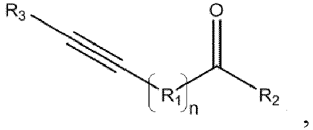 and R₁ is selected from alkylene, alkyleneoxy, fluoroalkylene, fluoroalkyleneoxy, alkenylene or fluoroalkenylene, and R₂ and R₃ are independently selected from hydrogen, phenyl, alkynyl, alkynyloxy, alkyl, alkoxy, fluoroalkyl, fluoroalkoxy, alkenyl or fluoroalkenyl;
the additive B is a boron-containing lithium salt.

Through the synergistic effect of the additive A and the additive B, the present disclosure can inhibit the decomposition of the electrolyte solution at high temperature, avoid gas generation, improve the safety, and effectively improve the high-temperature storage performance and cycle performance of the battery.

In the present disclosure, when n=1, the number of C atoms of R₁ is 1 to 6; when n=2, the number of C atoms of R₁ is 1 to 3; when n=3, the number of C atoms of R₁ is 1 or 2.

In the present disclosure, when R₂ and R₃ are selected from groups other than hydrogen and phenyl, the number of C atoms of R₂ and R₃ is preferably 2 to 6, respectively.

Preferably, R₁ is selected from alkylene, alkyleneoxy, or alkenylene, and R₂ and R₃ are independently selected from hydrogen, phenyl, alkyl, alkenyl, alkoxy or alkynyloxy.

In the present disclosure, when R₁ is selected from alkylene or alkenylene, R₂ and R₃ are independently selected from alkoxy or alkynyloxy; when R₁ is alkyleneoxy, R₂ and R₃ are independently selected from hydrogen, phenyl, alkyl, or alkenyl.

Further, when n=0, R₂ is preferably alkoxy or alkynyloxy.

Preferably, the additive A is selected from the group consisting of propargyl acetate, propargyl propionate, ethyl propiolate, 4-pentyn-1-yl acetate, ethyl 2-pentynoate, ethyl 3-butynoate (CAS No: 53841-07-9), ethyl 2-butynoate, carbonic acid methyl 2-propynyl ester, carbonic acid methyl 2-ethynyl ester, ethyl phenylpropiolate, propargyl propiolate, propargyl methacrylate, propargyl benzoate, and combinations thereof.

Preferably, the boron-containing lithium salt is selected from the group consisting of lithium difluoro(oxalate) borate, lithium tetrafluoroborate, lithium bis(oxalate)borate, lithium tetraborate, lithium triphenyl-n-butylborate, trimethylimidazolium tetrafluoroborate, and combinations thereof.

Preferably, the feeding mass of the additive A accounts for 0.01 to 2 % of the total mass of the non-aqueous electrolyte solution.

Further preferably, the feeding mass of the additive A accounts for 0.1 to 1 % of the total mass of the non-aqueous electrolyte solution.

More further preferably, the feeding mass of the additive A accounts for 0.2 to 0.8 % of the total mass of the non-aqueous electrolyte solution.

Preferably, the feeding mass of the additive B accounts for 0.01 to 2 % of the total mass of the non-aqueous electrolyte solution.

Further preferably, the feeding mass of the additive B accounts for 0.3 to 1.5 % of the total mass of the non-aqueous electrolyte solution.

Preferably, the organic solvent is a mixture of cyclic ester and chain ester.

Further preferably, the volume ratio of the cyclic ester to the chain ester in the organic solvent is 1: (5 to 15).

More further preferably, the volume ratio of the cyclic ester to the chain ester in the organic solvent is 1: (7 to 12).

Preferably, the cyclic ester is selected from the group consisting of γ-butyrolactone (GBL), ethylene carbonate (EC), propylene carbonate (PC), fluoroethylene carbonate (FEC), and combinations thereof.

Preferably, the chain ester is selected from the group consisting of dimethyl carbonate (DMC), ethyl methyl carbonate (EMC), diethyl carbonate (DEC), methyl propyl carbonate (MPC), methyl propionate (MP), ethyl propionate (EP), propyl propionate (PP), methyl acetate (MA), ethyl acetate (EA), propyl acetate (PA), methyl butyrate (MB), ethyl butyrate (EB), propyl butyrate (PB), methyl fluoropropionate (FMP), propyl fluoropropionate, ethyl fluoropropionate, ethyl fluoroacetate, and combinations thereof.

Preferably, the lithium salt is selected from the group consisting of lithium hexafluorophosphate (LiPF₆), lithium tetrafluoroborate (LiBF₄), lithium hexafluoroarsenate (LiAsF₆), anhydrous lithium perchlorate (LiClO₄), lithium bis(trifluoromethanesulfonyl)imide (LiN(SO₂CF₃)₂), lithium difluorobis(oxalate)phosphate (LiPF₂(C₂O₄)₂), lithium difluorophosphate (LiPO₂F₂), lithium trifluoromethanesulfonate (LiSO₃CF₃), lithium difluorobisoxalate phosphate (LiPO₈C₄F₂), lithium oxalyldifluoroborate, lithium bis(fluorosulfonyl)imide (LiN(SO₂F)₂), and combinations thereof.

Preferably, the concentration of the lithium salt is 1 to 1.5 mol/L.

Further preferably, the concentration of the lithium salt is 1.1 to 1.3 mol/L.

Preferably, the additives further comprise other additives, and the other additives are selected from the group consisting of vinylene carbonate (VC), vinyl ethylene carbonate (VEC), biphenyl (BP), cyclohexylbenzene (CHB), trioctyl phosphate (TOP), fluoroethylene carbonate (FEC), succinonitrile (SN), adiponitrile (AND), 1,3,6- hexanetricarbonitrile (HTCN), and combinations thereof.

In the present disclosure, the feeding mass of the other additives accounts for 2 to 10 % of the total mass of the non-aqueous electrolyte solution, more preferably 5 to 8%.

Further preferably, the other additives are vinylene carbonate and vinyl ethylene carbonate with a mass ratio of 1: (1.5 to 4).

More further preferably, the other additives are vinylene carbonate and vinyl ethylene carbonate with a mass ratio of 1: (2 to 3).

Another purpose of the present disclosure is to provide a lithium battery comprising a positive electrode, a negative electrode and an electrolyte solution, and the electrolyte solution is the non-aqueous electrolyte solution.

In the present disclosure, the additive A having the above-mentioned structure and the additive B are simultaneously contained in the non-aqueous electrolyte solution, and are coordinated with other components of the electrolyte solution, so that the lithium-ion battery containing the electrolyte solution has good high-temperature and cycle performance.

Due to the use of the above technical solutions, the present disclosure has the following advantages over the prior art:
In the non-aqueous electrolyte solution of the present invention, a new additive capable of replacing a sulfur-containing compound is used, such that the high-temperature storage performance and cycle performance of a lithium battery can be improved, and more options for the preparation of non-aqueous electrolyte solutions and lithium batteries are provided.

### Detailed Description of Exemplary Embodiments

In the following, the present disclosure is further described combining with specific embodiments. However, the present disclosure is not limited to these embodiments. The implementation conditions employed by the embodiments may be further adjusted according to particular requirements, and undefined implementation conditions usually are conditions in conventional experiments. The technical features involved in the respective implementations of the present disclosure can be combined with each other if they do not conflict with each other.

Unless otherwise specified, in the following embodiments and comparative examples, ppm refers to the concentration in parts per million, and wt% refers to the percentage by weight.

### Embodiment 1:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% propynyl acetate, 0.5 wt% lithium difluoro(oxalate) borate, 2 wt% vinylene carbonate, and 5 wt% vinyl ethylene carbonate were respectively added to the mixed solution to give an electrolyte solution.

### Embodiment 2:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.5 wt% propynyl acetate, 0.5 wt% lithium difluoro(oxalate) borate, 2 wt% vinylene carbonate, and 5 wt% vinyl ethylene carbonate were respectively added to the mixed solution to give an electrolyte solution.

### Embodiment 3:

In an argon-filled glove box (H₂O content < 10 ppm), DEC, EC and EMC were uniformly mixed at a volume ratio of 3:1:6, and 1.2 mol/L LiPF₆ was added to the mixed solution, then 1 wt% propynyl acetate, 0.5 wt% lithium difluoro(oxalate) borate, 2 wt% vinylene carbonate, and 5 wt% vinyl ethylene carbonate were respectively added to the mixed solution to give an electrolyte solution.

### Embodiment 4:

In an argon-filled glove box (H₂O content < 10 ppm), DEC, EC and EMC were uniformly mixed at a volume ratio of 3:1:6, and 1.2 mol/L LiPF₆ was added to the mixed solution, then 1 wt% propynyl acetate, 0.3 wt% lithium difluoro(oxalate) borate, 2 wt% vinylene carbonate and 5 wt% vinyl ethylene carbonate were respectively added to the mixed solution to give an electrolyte solution.

### Embodiment 5:

In an argon-filled glove box (H₂O content < 10 ppm), DEC, EC and EMC were uniformly mixed at a volume ratio of 3:1:6, and 1.2 mol/L LiPF₆ was added to the mixed solution, then 1 wt% propynyl acetate, 1 wt% lithium difluoro(oxalate) borate, 2 wt% vinylene carbonate, and 5 wt% vinyl ethylene carbonate were respectively added to the mixed solution to give an electrolyte solution.

### Embodiment 6:

In an argon-filled glove box (H₂O content < 10 ppm), DEC, EC and EMC were uniformly mixed at a volume ratio of 3:1:6, and 1.2 mol/L LiPF₆ was added to the mixed solution, then 1 wt% propynyl acetate, 1.5 wt% lithium difluoro(oxalate) borate, 2 wt% vinylene carbonate, and 5 wt% vinyl ethylene carbonate were respectively added to the mixed solution to give an electrolyte solution.

### Embodiment 7:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% ethyl propiolate, 0.5 wt% lithium difluoro(oxalate) borate, 2 wt% vinylene carbonate, and 5 wt% vinyl ethylene carbonate were respectively added to the mixed solution to give an electrolyte solution.

### Embodiment 8:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% carbonic acid methyl 2-propynyl ester, 0.5 wt% lithium difluoro(oxalate) borate, 2 wt% vinylene carbonate, and 5 wt% vinyl ethylene carbonate were respectively added to the mixed solution to give an electrolyte solution.

### Embodiment 9:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% ethyl phenylpropiolate, 0.5 wt% lithium difluoro(oxalate) borate, 2 wt% vinylene carbonate, and 5 wt% vinyl ethylene carbonate were respectively added to the mixed solution to give an electrolyte solution.

### Embodiment 10:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% propargyl propiolate, 0.5 wt% lithium difluoro(oxalate) borate, 2 wt% vinylene carbonate, and 5 wt% vinyl ethylene carbonate were respectively added to the mixed solution to give an electrolyte solution.

### Embodiment 11:

In an argon-filled glove box (H₂O content< 10 ppm), DEC, EC and EMC were uniformly mixed at a volume ratio of 3:1:6, and 1.2 mol/L LiPF₆ was added to the mixed solution, then 0.3 wt% propargyl methacrylate, 0.5 wt% lithium difluoro(oxalate) borate, 2 wt% vinylene carbonate, and 5 wt% vinyl ethylene carbonate were respectively added to the mixed solution to give an electrolyte solution.

### Embodiment 12:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% propargyl benzoate, 0.5 wt% lithium difluoro(oxalate) borate, 2 wt% vinylene carbonate, and 5 wt% vinyl ethylene carbonate were respectively added to the mixed solution to give an electrolyte solution.

### Embodiment 13:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% propargyl propionate, 0.5 wt% lithium difluoro(oxalate) borate, 2 wt% vinylene carbonate, and 5 wt% vinyl ethylene carbonate were respectively added to the mixed solution to give an electrolyte solution.

### Embodiment 14:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% 4-pentyn-1-yl acetate, 0.5 wt% lithium difluoro(oxalate) borate, 2 wt% vinylene carbonate, and 5 wt% vinyl ethylene carbonate were respectively added to the mixed solution to give an electrolyte solution.

### Embodiment 15:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% ethyl 2-pentynoate, 0.5 wt% lithium difluoro(oxalate) borate, 2 wt% vinylene carbonate, and 5 wt% vinyl ethylene carbonate were respectively added to the mixed solution to give an electrolyte solution.

### Embodiment 16:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% ethyl 3-butynoate, 0.5 wt% lithium difluoro(oxalate) borate, 2 wt% vinylene carbonate, and 5 wt% vinyl ethylene carbonate were respectively added to the mixed solution to give an electrolyte solution.

### Embodiment 17:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% ethyl 2-butynoate, 0.5 wt% lithium difluoro(oxalate) borate, 2 wt% vinylene carbonate, and 5 wt% vinyl ethylene carbonate were respectively added to the mixed solution to give an electrolyte solution.

### Embodiment 18:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% propynyl acetate, 0.5 wt% lithium tetrafluoroborate, 2 wt% vinylene carbonate, and 5 wt% vinyl ethylene carbonate were respectively added to the mixed solution to give an electrolyte solution.

### Embodiment 19:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% propynyl acetate, 0.5 wt% lithium triphenyl-n-butylborate, 2 wt% vinylene carbonate, and 5 wt% vinyl ethylene carbonate were respectively added to the mixed solution to give an electrolyte solution.

### Embodiment 20:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% propynyl acetate, 0.5 wt% trimethylimidazolium tetrafluoroborate, 2 wt% vinylene carbonate, and 5 wt% vinyl ethylene carbonate were respectively added to the mixed solution to give an electrolyte solution.

### Embodiment 21:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% propargyl benzoate and 0.5 wt% lithium difluoro(oxalate) borate were respectively added to the mixed solution to give an electrolyte solution.

### Embodiment 22:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% carbonic acid methyl 2-propynyl ester and 0.5 wt% lithium difluoro(oxalate) borate were respectively added to the mixed solution to give an electrolyte solution.

### Embodiment 23:

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% propargyl acetate and 0.5 wt% lithium difluoro(oxalate) borate were respectively added to the mixed solution to give an electrolyte solution.

### Comparative Example 1

In an argon-filled glove box (H₂O content < 10 ppm), DEC, EC and EMC were uniformly mixed at a volume ratio of 3:1:6, and 1.2 mol/L LiPF₆ was added to the mixed solution, then 2 wt% vinylene carbonate, and 5 wt% vinyl ethylene carbonate were respectively added to the mixed solution to give an electrolyte solution.

### Comparative Example 2

In an argon-filled glove box (H₂O content < 10 ppm), DEC, EC and EMC were uniformly mixed at a volume ratio of 3:1:6, and 1.2 mol/L LiPF₆ was added to the mixed solution, then 0.5 wt% lithium difluoro(oxalate) borate, 2 wt% vinylene carbonate, and 5 wt% vinyl ethylene carbonate were respectively added to the mixed solution to give an electrolyte solution.

### Comparative Example 3

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% propynyl acetate, 2 wt% vinylene carbonate, and 5 wt% vinyl ethylene carbonate were respectively added to the mixed solution to give an electrolyte solution.

### Comparative Example 4

In an argon-filled glove box (H₂O content < 10 ppm), DEC, EC and EMC were uniformly mixed at a volume ratio of 3:1:6, and 1.2 mol/L LiPF₆ was added to the mixed solution, then 1.5 wt% 1,3-propanesultone, 2 wt% vinylene carbonate, and 5 wt% vinyl ethylene carbonate were respectively added to the mixed solution to give an electrolyte solution.

### Comparative Example 5

In an argon-filled glove box (H₂O content < 10 ppm), DEC, EC and EMC were uniformly mixed at a volume ratio of 3:1:6, and 1.2 mol/L LiPF₆ was added to the mixed solution, then 0.3 wt% propargyl acetate was added to the mixed solution to give an electrolyte solution.

### Comparative Example 6

In an argon-filled glove box (H₂O content < 10 ppm), DEC, EC and EMC were uniformly mixed at a volume ratio of 3:1:6, and 1.2 mol/L LiPF₆ was added to the mixed solution, then 0.5 wt% lithium difluoro(oxalate) borate was added to the mixed solution to give an electrolyte solution.

The electrolyte solutions prepared from the above-mentioned Embodiments 1 to 23 and Comparative Examples 1 to 6 were tested in the MCN811 graphite battery respectively:
The capacity retention rate after 30 days of high-temperature storage at 60 °C, i.e., the capacity when discharging to 3.0 V at 1 C after charging to 4.2 V at 1 C under constant current/constant voltage (CC/CV) conditions at 25 °C and then storing in an oven at 60 °C for 30 days divided by the capacity when discharging to 3.0 V at 1 C after charging under the same conditions without storage;
The battery bulging rate stored at a high temperature of 60 °C for 30 days, that is, the difference between the thickness of the battery after storage and the thickness of the battery before storage divided by the thickness of the battery before storage;
The capacity retention rate after 1000 cycles at 45 °C, i.e., the capacity when discharging to 3.0 V at 1 C after charging to 4.2 V at 1 C under constant current/constant voltage (CC/CV) conditions at 45 °C after 1000 cycles at 45 °C divided by the capacity when discharging to 3.0 V at 1 C after charging to 4.2 V under the same conditions without cycles;
The battery bulging rate after 1000 cycles at 45 °C, that is, the difference between the thickness of the battery after the cycles and the thickness of the battery before the cycles divided by the thickness of the battery before the cycles;
The relevant experimental data are shown in Table 1.

**Table 1**

| | Capacity retention rate after 30 days of high-temperature storage at 60 °C (%) | Battery bulging rate after 30 days of high-temperature storage at 60 °C (%) | Battery capacity retention rate after 1000 cycles at 45 °C (%) | Battery capacity bulging rate after 1000 cycles at 45 °C (%) |
|---|---|---|---|---|
| Embodiment 1 | 90.5 | 9.2 | 88.9 | 4.5 |
| Embodiment 2 | 90.1 | 9.1 | 88.7 | 4.3 |
| Embodiment 3 | 89.6 | 9.1 | 88.8 | 4.4 |
| Embodiment 4 | 90.2 | 9.0 | 87.9 | 4.5 |
| Embodiment 5 | 90.3 | 9.1 | 89.6 | 4.4 |
| Embodiment 6 | 89.8 | 9.0 | 88.7 | 4.5 |
| Embodiment 7 | 89.5 | 9.3 | 86.5 | 4.3 |
| Embodiment 8 | 89.2 | 9.0 | 86.7 | 4.2 |
| Embodiment 9 | 88.5 | 8.7 | 88.2 | 3.9 |
| Embodiment 10 | 90.9 | 8.2 | 89.3 | 3.8 |
| Embodiment 11 | 89.7 | 9.4 | 89.2 | 4.5 |
| Embodiment 12 | 89.4 | 8.3 | 89.1 | 3.9 |
| Embodiment 13 | 88.6 | 8.4 | 88.9 | 4.2 |
| Embodiment 14 | 88.7 | 8.6 | 88.7 | 4.3 |
| Embodiment 15 | 88.2 | 8.5 | 89.1 | 4.1 |
| Embodiment 16 | 88.5 | 8.3 | 88.7 | 4.2 |
| Embodiment 17 | 89.1 | 8.2 | 59.4 | 4.2 |
| Embodiment 18 | 89.5 | 9.0 | 88.3 | 4.4 |
| Embodiment 19 | 88.9 | 8.2 | 87.5 | 3.7 |
| Embodiment 20 | 89.6 | 8.5 | 89.2 | 3.8 |
| Embodiment 21 | 87.5 | 9.4 | 86.4 | 4.2 |
| Embodiment 22 | 88.1 | 9.2 | 85.2 | 4.4 |
| Embodiment 23 | 89.2 | 9.3 | 86.1 | 4.4 |
| Comparative example 1 | 60.5 | 20.5 | 75.2 | 6.9 |
| Comparative example 2 | 69.4 | 19.1 | 77.3 | 6.2 |
| Comparative example 3 | 70.2 | 17.5 | 78.2 | 5.9 |
| Comparative example 4 | 90.2 | 9.1 | 88.4 | 4.2 |
| Comparative example 5 | 69.5 | 17.8 | 77.5 | 6.0 |
| Comparative example 6 | 67.7 | 19.5 | 76.9 | 6.3 |

The above detailed describes the present disclosure, and is intended to make those skilled in the art being able to understand the present disclosure and thereby implement it, and should not be concluded to limit the protective scope of this disclosure. Any equivalent variations or modifications according to the spirit of the present disclosure should be covered by the protective scope of the present disclosure.

## Claims

1. A non-aqueous electrolyte solution, comprising a lithium salt, an organic solvent, and additives, **characterized in that,** the additives comprise an additive A and an additive B,
the additive A is one or more of the substances represented by the structural general formula (1), the structural general formula (1) of the additive A is: 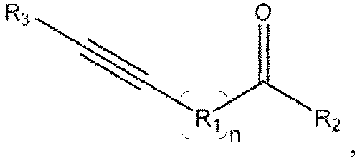 0 ≤ n ≤ 3, R₁ is selected from alkylene, alkyleneoxy, fluoroalkylene, fluoroalkyleneoxy, alkenylene or fluoroalkenylene, and R₂ and R₃ are independently selected from hydrogen, phenyl, alkynyl, alkynyloxy, alkyl, alkoxy, fluoroalkyl, fluoroalkoxy, alkenyl or fluoroalkenyl;
the additive B is a boron-containing lithium salt.

2. A non-aqueous electrolyte solution according to claim 1, **characterized in that,** R₁ is selected from alkylene, alkyleneoxy, or alkenylene, and R₂ and R₃ are independently selected from hydrogen, phenyl, alkyl, alkenyl, alkoxy or alkynyloxy.

3. A non-aqueous electrolyte solution according to claim 1 or 2, **characterized in that,** the additive A is selected from the group consisting of propargyl acetate, propargyl propionate, ethyl propiolate, 4-pentyn-1-yl acetate, ethyl 2-pentynoate, ethyl 3-butynoate, ethyl 2-butynoate, carbonic acid methyl 2-propynyl ester, carbonic acid methyl 2-ethynyl ester, ethyl phenylpropiolate, propargyl propiolate, propargyl methacrylate, propargyl benzoate, and combinations thereof.

4. A non-aqueous electrolyte solution according to claim 1, **characterized in that,** the additive B is selected from the group consisting of lithium difluoro(oxalate) borate, lithium tetrafluoroborate, lithium bis(oxalate)borate, lithium tetraborate, lithium triphenyl-n-butylborate, trimethylimidazolium tetrafluoroborate, and combinations thereof.

5. A non-aqueous electrolyte solution according to claim 1, **characterized in that,** the feeding mass of the additive A accounts for 0.01 to 2 % of the total mass of the non-aqueous electrolyte solution; the feeding mass of the additive B accounts for 0.01 to 2 % of the total mass of the non-aqueous electrolyte solution.

6. A non-aqueous electrolyte solution according to claim 5, **characterized in that,** the feeding mass of the additive A accounts for 0.1 to 1 % of the total mass of the non-aqueous electrolyte solution;
and/or, the feeding mass of the additive B accounts for 0.3 to 1.5 % of the total mass of the non-aqueous electrolyte solution;

7. A non-aqueous electrolyte solution according to claim 1, **characterized in that,** the organic solvent is a mixture of cyclic ester and chain ester.

8. A non-aqueous electrolyte solution according to claim 7, **characterized in that,** the cyclic ester is selected from the group consisting of γ-butyrolactone, ethylene carbonate, propylene carbonate, fluoroethylene carbonate, and combinations thereof;
and/or, the chain ester is selected from the group consisting of dimethyl carbonate, ethyl methyl carbonate, diethyl carbonate, methyl propyl carbonate, methyl propionate, ethyl propionate, propyl propionate, methyl acetate, ethyl acetate, propyl acetate, methyl butyrate, ethyl butyrate, propyl butyrate, methyl fluoropropionate, propyl fluoropropionate, ethyl fluoropropionate, ethyl fluoroacetate, and combinations thereof.

9. A non-aqueous electrolyte solution according to claim 1, **characterized in that,** the lithium salt is selected from the group consisting of lithium hexafluorophosphate, lithium tetrafluoroborate, lithium hexafluoroarsenate, anhydrous lithium perchlorate, lithium bis(trifluoromethanesulfonyl)imide, lithium difluorobis(oxalate)phosphate, lithium difluorophosphate, lithium trifluoromethanesulfonate, lithium difluorobisoxalate phosphate, lithium oxalyldifluoroborate, lithium bis(fluorosulfonyl)imide, and combinations thereof.

10. A non-aqueous electrolyte solution according to claim 9, **characterized in that,** the concentration of the lithium salt is 1 to 1.5 mol/L.

11. A non-aqueous electrolyte solution according to claim 1, **characterized in that,** the additives further comprise other additives, and the other additives are selected from the group consisting of vinylene carbonate, vinyl ethylene carbonate, biphenyl, cyclohexylbenzene, trioctyl phosphate, fluoroethylene carbonate, succinonitrile, adiponitrile, 1,3,6- hexanetricarbonitrile, and combinations thereof.

12. A non-aqueous electrolyte solution according to claim 11, **characterized in that,** the other additives are vinylene carbonate and vinyl ethylene carbonate with a mass ratio of 1: (1.5 to 4).

13. A non-aqueous electrolyte solution, comprising a lithium salt, an organic solvent, and additives, **characterized in that,** the additives comprising an additive A and an additive B,
the additive A is selected from the group consisting of propargyl acetate, propargyl propionate, ethyl propiolate, 4-pentyn-1-yl acetate, ethyl 2-pentynoate, ethyl 3-butynoate, ethyl 2-butynoate, carbonic acid methyl 2-propynyl ester, carbonic acid methyl 2-ethynyl ester, ethyl phenylpropiolate, propargyl propiolate, propargyl methacrylate, propargyl benzoate, and combinations thereof, wherein the feeding mass of the additive A accounts for 0.01 to 2 % of the total mass of the non-aqueous electrolyte solution;
the additive B is selected from the group consisting of lithium difluoro(oxalate) borate, lithium tetrafluoroborate, lithium bis(oxalate)borate, lithium tetraborate, lithium triphenyl-n-butylborate, trimethylimidazolium tetrafluoroborate, and combinations thereof, wherein the feeding mass of the additive B accounts for 0.01 to 2 % of the total mass of the non-aqueous electrolyte solution;
the lithium salt is selected from the group consisting of lithium hexafluorophosphate, lithium tetrafluoroborate, lithium hexafluoroarsenate, anhydrous lithium perchlorate, lithium bis(trifluoromethanesulfonyl)imide, lithium difluorobis(oxalate)phosphate, lithium difluorophosphate, lithium trifluoromethanesulfonate, lithium difluorobisoxalate phosphate, lithium oxalyldifluoroborate, lithium bis(fluorosulfonyl)imide, and combinations thereof, wherein the concentration of the lithium salt is 1 to 1.5 mol/L;
the organic solvent is a mixture of cyclic ester and chain ester, the cyclic ester is selected from the group consisting of γ-butyrolactone, ethylene carbonate, propylene carbonate, fluoroethylene carbonate, and combinations thereof; the chain ester is selected from the group consisting of dimethyl carbonate, ethyl methyl carbonate, diethyl carbonate, methyl propyl carbonate, methyl propionate, ethyl propionate, propyl propionate, methyl acetate, ethyl acetate, propyl acetate, methyl butyrate, ethyl butyrate, propyl butyrate, methyl fluoropropionate, propyl fluoropropionate, ethyl fluoropropionate, ethyl fluoroacetate, and combinations thereof, and the volume ratio of the cyclic ester to the chain ester in the organic solvent is 1: (5 to 15).

14. A non-aqueous electrolyte solution according to claim 13, **characterized in that,** the additives further comprise other additives, and the other additives are selected from the group consisting of vinylene carbonate, vinyl ethylene carbonate, biphenyl, cyclohexylbenzene, trioctyl phosphate, fluoroethylene carbonate, succinonitrile, adiponitrile, 1,3,6- hexanetricarbonitrile, and combinations thereof, wherein the feeding mass of the other additives accounts for 2 to 10 % of the total mass of the non-aqueous electrolyte solution.

15. A lithium battery, comprising a positive electrode, a negative electrode, and an electrolyte solution, **characterized in that**, the electrolyte solution is a non-aqueous electrolyte solution according to any one of claims 1 to 14.
